# EUROPEAN PATENT APPLICATION

(11) **EP 4 675 837 A1**
(43) Date of publication of application: **07.01.2026**
(21) Application number: 24781259.7
(22) Date of filing: 28.03.2024
(51) Int. Cl.: H01M 50/531, H01M 50/574, H01M 10/04, H01M 50/204

(54) **BATTERY CELL AND BATTERY DEVICE**

(30) Priority: 30.03.2023 KR 20230042028
(71) Applicant: SK On Co., Ltd., Seoul 03161 (KR)
(72) Inventor: SHIN, Jae-Sik, Daejeon 34124 (KR); KO, Bo-Kyung, Daejeon 34124 (KR); JU, Seung-Hoon, Daejeon 34124 (KR)
(74) Representative: Stolmár & Partner Patentanwälte PartG mbB
(86) International application number: PCT/KR2024/003960
(87) International publication number: WO 2024/205269

(57) **Abstract**

A battery cell according to one embodiment of the present invention comprises: a cell case; a cathode terminal disposed on one side of the outside of the cell case so as to be insulated from the cell case; an anode terminal spaced apart from the cathode terminal and disposed on the other side of the outside of the cell case so as to be insulated from the cell case; a cell material part disposed inside the cell case and having a cathode tab electrically connected to the cathode terminal and an anode tab electrically connected to the anode terminal; a fuse which is electrically connected to the cathode terminal and the cathode tab and opens during operation to disconnect the cathode terminal and the cathode tab; and a connection part for electrically connecting the cathode tab of the cell material part and the cell case.

## Description

### Technical Field

The present disclosure relates to a battery cell and a battery device having a reverse potential prevention function.

### Background Art

In general, batteries used as a power source for electric vehicles (EVs), energy storage systems, etc., may be configured in the form of a battery pack. Such a battery pack may include a plurality of battery modules, each of which may include a plurality of battery cells.

Batteries may be applied to electric vehicles and may include a battery management system (BMS) including a circuit for managing battery charging and discharging.

The battery cells may be configured to have various shapes, such as prismatic, cylindrical, and pouch-like shapes.

In existing prismatic battery cells, a cell case is connected to a cathode terminal to generate polarity for the cell case. The cell case is connected directly beneath the cathode terminal.

For example, each of a plurality of battery cells may include a cell fuse connected between the cathode terminal and a cell material portion (e.g., jelly roll) of the battery cell. In this case, a position at which the cell case is connected may be a conducting wire connecting the cell fuse to the cathode terminal.

However, for example, in a case in which a battery device includes a plurality of battery cells, including a second battery cell connected to a first battery cell, when a cathode terminal of the second battery cell is connected to an anode terminal of the first battery cell while a cell case of the second battery cell is connected, if a fuse of the second battery cell operates in an open state, the anode terminal of the first battery cell is connected to the cathode terminal of the second battery cell and the cell case of the second battery cell is connected to the cathode terminal of the second battery cell. As a result, since the cell case of the second battery cell is connected to the anode terminal of the first battery cell, the cell case of the second battery cell becomes a negative terminal, which may cause a safety issue.

That is, when the cell fuse operates in an open state due to a defect of a battery module, the polarity of the cell case changes to negative, resulting in a problem of reverse potential occurring in the battery cell including the open cell fuse.

### Disclosure of Invention

### Technical Problem

An aspect of the present disclosure is to provide a battery cell and battery device including a plurality of battery cells, in which a cell case may maintain positive (+) or negative (-) polarity regardless of a fuse operation of each battery cell, thereby preventing a reverse potential in the cell case.

### Solution to Problem

According to an aspect of the present disclosure, a battery cell includes: a cell case; a cathode terminal disposed on one outer side of the cell case and insulated from the cell case; an anode terminal disposed on the other outer side of the cell case and insulated from the cell case, the anode terminal being spaced apart from the cathode terminal; a cell material portion disposed inside the cell case and having a cathode tab electrically connected to the cathode terminal and an anode tab electrically connected to the anode terminal; a fuse electrically connected to the cathode terminal and the cathode tab, the fuse being opened during an operation to electrically disconnect the cathode terminal and the cathode tab; and a connection portion electrically connecting the cathode tab of the cell material portion and the cell case.

According to an aspect of the present disclosure, a battery device includes: a housing; and a plurality of battery cells arranged inside the housing and electrically connected to each other, wherein at least one of the plurality of battery cells includes: a cell case; a cathode terminal disposed on one outer side of the cell case and insulated from the cell case; an anode terminal disposed on the other outer side of the cell case and insulated from the cell case, the anode terminal being spaced apart from the cathode terminal; a cell material portion disposed inside the cell case and having a cathode tab electrically connected to the cathode terminal and an anode tab electrically connected to the anode terminal; a fuse electrically connected to the cathode terminal and the cathode tab, the fuse being opened during an operation to electrically disconnect the cathode terminal and the cathode tab; and a connection portion electrically connecting the cathode tab of the cell material portion and the cell case.

According to an aspect of the present disclosure, a battery cell includes: a cell case; a cell material portion, insulated from the cell case and disposed inside the cell case, having a cathode tab disposed on one side and an anode tab disposed on the other side, opposite to the one side; a cathode current collector connected to the cell case and disposed on the cathode tab; an anode current collector insulated from the cell case and disposed on the anode tab; a cathode cap connected to the cell case, disposed on one side of the cell case, and covering the cathode current collector; a cathode terminal inserted into a through-hole formed in the cathode cap; a fuse disposed between an inner surface of the cathode terminal and the cathode current collector; and a connection portion electrically connecting the cathode current collector and the cell case.

According to an aspect of the present disclosure, a battery cell includes: a cell case; a cell material portion, insulated from the cell case and disposed inside the cell case, having an anode tab disposed on one side thereof and a cathode tab disposed on the other side thereof, opposite to the one side; an anode current collector connected to the cell case and disposed on the anode tab; a cathode current collector insulated from the cell case and disposed on the cathode tab; an anode cap connected to the cell case, disposed on one side of the cell case, and covering the anode current collector; an anode terminal inserted into a through-hole formed in the anode cap; a fuse disposed between an inner surface of the anode terminal and the anode current collector; and a connection portion electrically connecting the anode current collector and the cell case.

### Advantageous Effects of Invention

According to an embodiment of the present disclosure, in a battery device including a plurality of battery cells, even if a fuse included in one battery cell opens, the cell case of the battery cell with the opened fuse maintains either positive (+) or negative (-) polarity, thereby preventing a reverse potential of the battery cell occurring when the fuse opens, and accordingly, the stability of the battery may be improved even when the fuse opens.

### Brief Description of Drawings

FIG. 1 is a diagram of a battery cell according to an embodiment of the present disclosure.
FIG. 2 is a diagram of a battery cell according to an embodiment of the present disclosure. FIG. 3 is a diagram of a battery device according to an embodiment of the present disclosure.
FIG. 4 is a diagram of a first structure of a battery cell.
FIG. 5 is a diagram of a second structure of a battery cell.
FIG. 6 is an enlarged diagram of region A including a first insulating portion of FIG. 4.
FIG. 7 is an enlarged diagram of region B including a second insulating portion of FIG. 4.
FIG. 8 is a diagram of an internal connection structure of a battery cell before a fuse operation.
FIG. 9 is a diagram of an internal connection structure of a battery cell after a fuse operation.
FIG. 10 is a diagram of the internal connection structure of a battery device before a fuse operation.
FIG. 11 is a diagram of the internal connection structure of a battery module after a fuse operation.
FIG. 12 is a diagram of a first connection structure between battery cells of a battery device.
FIG. 13 is a diagram of a second connection structure between battery cells of a battery device.
FIG. 14 is a diagram of a battery cell according to an embodiment of the present disclosure.
FIG. 15 is a diagram illustrating an example of a cylindrical structure of a battery cell according to an embodiment of the present disclosure.
FIG. 16 is a diagram illustrating another example of a cylindrical structure of a battery cell according to an embodiment of the present disclosure.

### Best Mode for the Invention

Hereinafter, it is to be understood that the present disclosure is not limited to the illustrated embodiments, and may be variously modified without departing from the spirit and scope of the invention.

Further, it is to be understood that the configuration, shape, and numerical value explained as an example are only examples for helping understanding of technical matters of the present disclosure for each embodiment of the present disclosure, and thus the present disclosure is not limited thereto, and the present disclosure may be variously changed without departing from the spirit and scope of the present disclosure. Embodiments of the present disclosure may be combined with each other to form a variety of new embodiments.

In the drawings referred to in the present application, the same reference numerals will be used for the components having substantially the same configuration and function throughout the present application.

Hereinafter, in order that those having ordinary skill in the art to which the present disclosure pertains may easily practice the present disclosure, embodiments of the present disclosure will be described in detail with reference to the accompanying drawings.

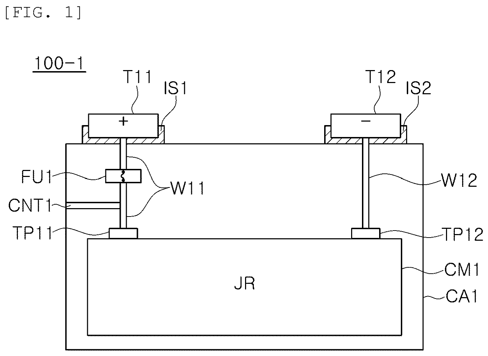

FIG. 1 is a schematic diagram of a battery cell according to an embodiment of the present disclosure.

Referring to FIG. 1, a battery cell 100-1 according to an embodiment of the present disclosure may include a cell case CA1, a cathode terminal T11, an anode terminal T12, a cell material portion CM1, a fuse FU1, and a connection portion CNT1.

The cell case CA1 may internally include the cell material portion CM1, the fuse FU1 and the connection portion CNT1 and may be provided with a cathode terminal T11 and an anode terminal T12 located on the outside thereof.

The cathode terminal T11 may be located on one side outside the cell case CA1 and insulated from the cell case CA1. The anode terminal T12 may be spaced apart from the cathode terminal T11, insulated from the cell case CA1, and disposed on the other side outside the cell case CA1. For example, the cathode terminal T11 and the anode terminal T12 may include a conductive material. For example, the cathode terminal T11 may include aluminum and the anode terminal T12 may include copper, but the present disclosure is not limited to these examples.

The cell material portion CM1 may be disposed within the cell case CA1 and may include a cathode tab TP11 electrically connected to the cathode terminal T11 and an anode tab TP12 electrically connected to the anode terminal T12. For example, the cathode tab TP11 and the anode tab TP12 may include a conductive material. For example, the cathode tab TP11 may include aluminum and the anode tab TP12 may include copper, but are not limited thereto. For example, the cell material portion CM1 may include a cathode material connected to the cathode tab TP11, a separator and an anode material connected to the anode tab TP12. For example, the cell material portion CM1 may include a jelly roll, but is not limited thereto.

The fuse FU1 may electrically connect the cathode terminal T11 to the cathode tab TP11. When the battery is in a normal condition without any defects, the cathode terminal T11 is electrically connected to the cathode tab TP11 through the fuse FU1. However, if the battery is defective and in an abnormal state and the fuse FU1 operates and opens, a first conducting wire W11 may be electrically separated, and accordingly, the cathode terminal T11 may be electrically disconnected from the cathode tab TP11.

The connection portion CNT1 may electrically connect the cathode tab TP11 of the cell material portion CM1 to the cell case CA1 so that the cell case CA1 maintains a positive polarity. For example, the connection portion CNT1 may always electrically connect the cathode terminal T11 to the cell case CA1, regardless of the operation of the fuse FU1. For example, the connection portion CNT1 may include a conductive material. For example, the connection portion CNT1 may include aluminum but is not limited thereto.

In addition, the battery cell 100-1 may include the first conducting wire W11, a second conducting wire W12, a first insulating portion IS1 and a second insulating portion IS2.

The first conducting wire W11 may electrically connect the cathode terminal T11 to the cathode tab TP11 via the fuse FU1. The second conducting wire W12 may electrically connect the anode terminal T12 to the anode tab TP12. For example, the first conducting wire W11 and the second conducting wire W12 may include a conductive material. For example, the first conducting wire W11 may include aluminum and the second conducting wire W12 may include copper, but the first conducting wire W11 and the second conducting wire W12 are not limited thereto.

The first insulating portion IS1 may separate the cathode terminal T11 and the first conducting wire W11 from the cell case CA1. The second insulating portion IS2 may separate the anode terminal T12 and the second conducting wire W12 from the cell case CA1. For example, the first insulating portion IS1 and the second insulating portion IS2 may include an insulating material, such as plastic, but is not limited thereto.

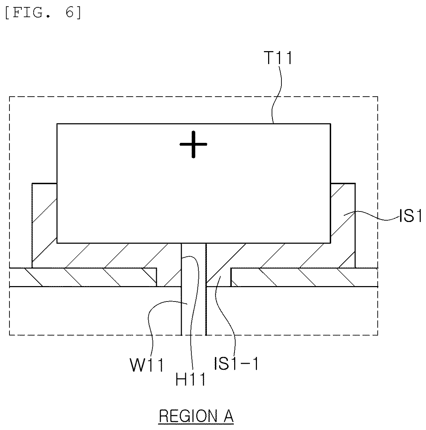

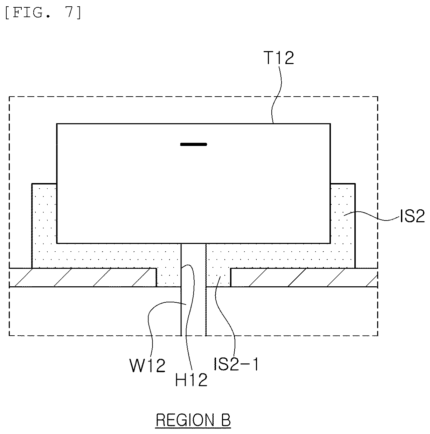

The first insulating portion IS1 and the second insulating portion IS2 are described in more detail with reference to FIGS. 6 and 7.

The connection portion CNT1 may be electrically connected, directly or indirectly, to the cathode tab TP11 of the cell material portion CM1, and regardless of the operation of the fuse FU1, the cell case CA1 is connected to the cathode tab TP11 of the cell material portion CM1 through the connection portion CNT1, so that the cell case CA1 may maintain a positive potential.

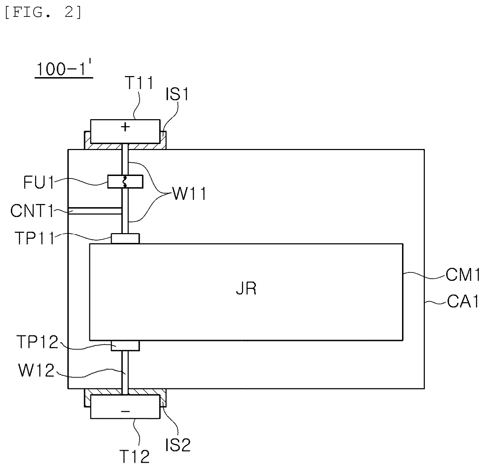

FIG. 2 is a diagram illustrating an example of a battery cell according to an embodiment of the present disclosure.

Referring to FIG. 2, a battery cell 100-1' according to an embodiment of the present disclosure illustrated in FIG. 2 has a structure substantially similar to that of the battery cell 100-1 illustrated in FIG. 1, with only some differences in structure. The description will focus on the different structure.

Compared to the battery cell 100-1 illustrated in FIG. 1, the battery cell 100-1' illustrated in FIG. 2 has the same arrangement position of the cathode terminal T11 and the cathode tab TP11, but the arrangement position of the anode terminal T12 and the anode tab TP12 differ from the arrangement position of the cathode terminal T11 and the cathode tab TP11.

For example, the anode terminal T12 may be disposed on the other side outside the cell case CA1, opposite to one side of the cell case CA1 on which the cathode terminal T11 is disposed.

Furthermore, the anode tab TP12 may be disposed on the other side of the cell material portion CM1, opposite to one side of the cell material portion CM1 on which the cathode tab TP11 is disposed.

The arrangement positions of the cathode terminal T11, the anode terminal T12, the cathode tab TP11, and the anode tab TP12 illustrated in FIGS. 1 and 2 are merely examples and are not limited to these examples, and the cathode terminal T11 and the anode terminal T12 may be arranged at any position on the outer surface of the cell case CA1. The cathode tab TP11 and anode tab TP12 may also be arranged at any position on the outer surface of the cell material portion CM1.

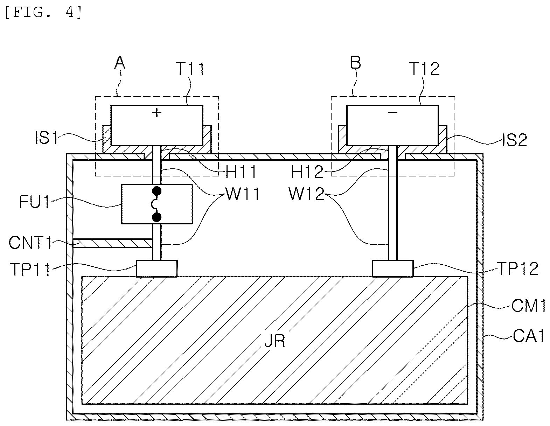

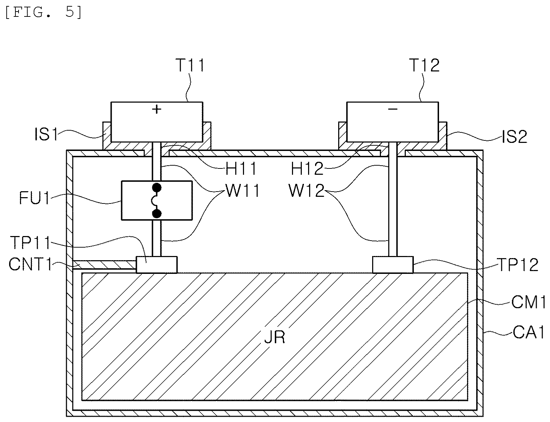

Examples of the connection portion are illustrated in FIGS. 4 and 5.

Hereinafter, in the present disclosure, the structure illustrated in FIG. 1 will be described as a basic structure. However, this is for convenience of description and understanding and is not intended to be limiting.

Regarding each drawing of the present disclosure, unnecessary redundant descriptions of components with the same reference numerals and functions may be omitted and possible differences in each drawing may be described.

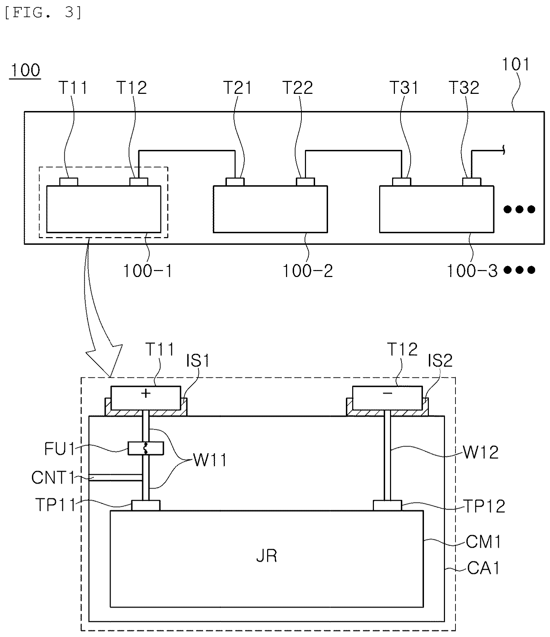

FIG. 3 is a diagram of a battery device according to an embodiment of the present disclosure.

Referring to FIG. 3, a battery device 100 according to an embodiment of the present disclosure may include a housing 101 and a plurality of battery cells 100-1, 100-3, ... For example, the battery device 100 may be an energy storage device. For example, the battery device 100 may be a battery module or a battery pack.

The housing 101 may be an outer case of the battery device 100.

At least one or each of the plurality of battery cells 100-1, 100-3, ... may include the cell case CA1, the cathode terminal T11, the anode terminal T12, the cell material portion CM1, the fuse FU1, and the connection portion CNT1.

In addition, since at least one or each of the plurality of battery cells 100-1, 100-3, ... may have the same structure as that of the battery cell 100-1 illustrated in FIG. 1, the same descriptions as those described above with reference to FIG. 1 are omitted.

Meanwhile, the battery device 100 may include a plurality of battery cells. In the present document, for convenience of description and understanding, a case in which the battery device 100 includes a first battery cell 100-1, a second battery cell 100-2, and a third battery cell 100-3 may be described, but the present disclosure is not limited thereto.

For example, when the battery device 100 includes the first battery cell 100-1, the second battery cell 100-2, and the third battery cell 100-3, the cathode terminal T21 of the second battery cell 100-2 may be connected to the anode terminal T12 of the first battery cell 100-1 and the anode terminal T22 of the second battery cell 100-2 may be connected to the cathode terminal T31 of the third battery cell 100-3.

With this connection method, the plurality of battery cells 100-1-100-3, ... may be connected in series with each other, but the present disclosure is not limited to the serial connection structure.

Hereinafter, in the present disclosure, for convenience of description and understanding, the battery cell 100-1, among the plurality of battery cells 100-1-100-3,..., will be described as an example. However, since the description of the battery cell 100-1 may be applied to each of the plurality of battery cells 100-1-100-3,..., redundant descriptions of other battery cells having the same structure may be omitted.

An embodiment in which the cell case CA1 is connected to the cathode tab TP11 of the cell material portion CM1 to maintain positive (+) polarity will be described with reference to FIGS. 4 and 5.

FIG. 4 is a diagram of a first structure between battery cells, and FIG. 5 is a diagram of a second structure of a battery cell. Referring to FIG. 4, the connection portion CNT1 may be connected to the first conducting wire W11, and the first conducting wire W11 may be connected to the cathode tab TP11 of the cell material portion CM1. Accordingly, the connection portion CNT1 may be electrically connected to the cathode tab TP11 of the cell material portion CM1 via the first conducting wire W11.

For example, one end of the connection portion CNT1 may be connected to the cell case CA1 and the other end of the connection portion CNT1 may be connected to the cathode tab TP11 of the cell material portion CM1 via the first conducting wire W11.

Referring to FIG. 5, the connection portion CNT1 may be electrically connected directly to the cathode terminal T11 of the cell material portion CM1 without passing through the first conducting wire W11.

For example, one end of the connection portion CNT1 may be connected to the cell case CA1 and the other end of the connection portion CNT1 may be connected directly to the cathode tab TP11 of the cell material portion CM1 without passing through the first conducting wire W11.

FIG. 6 is an enlarged view of region A of FIG. 4 including the first insulating portion and FIG. 7 is an enlarged view of region B of FIG. 4 including the second insulating portion.

Referring to FIG. 6, the first insulating portion IS1 may include a first through-hole H11 and a first extension IS1-1.

The first conducting wire W11 passes through the first through-hole H11 to connect the cathode terminal T11 and the cathode tab TP11, thereby connecting the cathode tab TP11 and the cathode terminal T11 via the first conducting wire W11.

The first insulating portion IS1 may extend from a position between the cell case CA1 and the cathode terminal T11 to the space between the cell case CA1 and the first conducting wire W11 via the first extension IS1-1.

Therefore, the cathode terminal T11 may be electrically separated from the cell case CA1 by the first insulating portion IS1 and the first conducting wire W11 may be electrically separated from the cell case CA1 by the first extension IS1-1.

Referring to FIG. 7, the second insulating portion IS2 may include a second through-hole H12 and a second extension IS1-2.

The second conducting wire W12 may pass through the second through-hole H12 to connect the anode terminal T12 and the anode tab TP12. Accordingly, the cathode tab TP12 and the cathode terminal T12 may be connected to each other through the second conducting wire W12.

The second insulating portion IS2 may extend from a position between the cell case CA1 and the anode terminal T12 to the space between the cell case CA1 and the second conducting wire W12 via the second extension IS1-2.

Accordingly, the anode terminal T12 may be electrically separated from the cell case CA1 by the second insulating portion IS2 and the second conducting wire W12 may be electrically separated from the cell case CA1 by the second extension IS1-2.

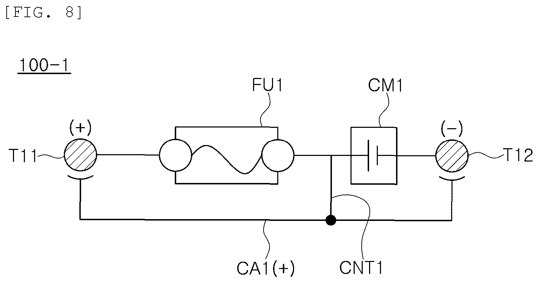

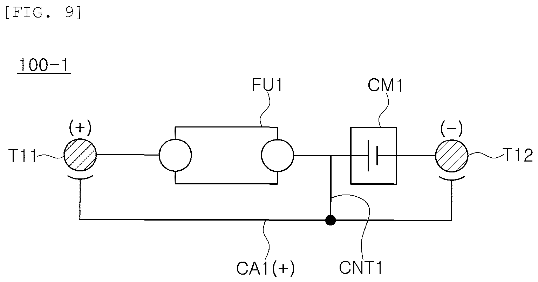

FIG. 8 is a diagram of an internal connection structure of a battery cell before a fuse operation and FIG. 9 is a diagram of an internal connection structure of a battery cell after a fuse operation.

Referring to FIG. 8, in one unit battery cell 100-1, before the fuse FU1 operates, the cell case CA1 is connected to the cell material portion CM1 by the connection portion CNT1.

Referring to FIG. 9, in one unit battery cell 100-1, the cell case CA1 is still connected to the cell material portion CM1 by the connection portion CNT1 even after the fuse FU1 operates.

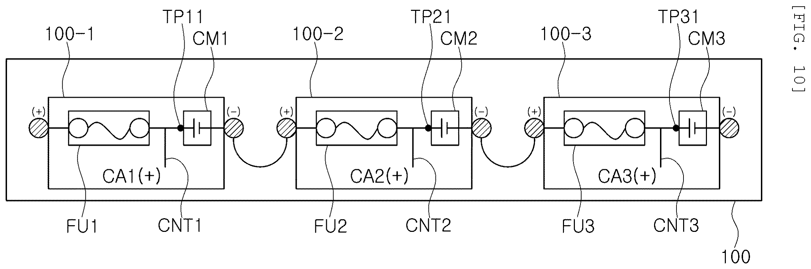

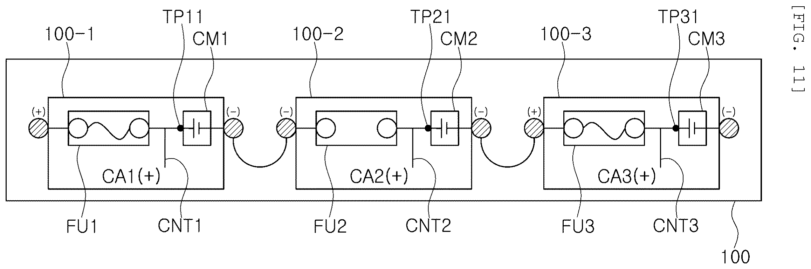

FIG. 10 illustrates an example of the internal connection structure of a battery device before a fuse operation and FIG. 11 illustrates an example of the internal connection structure of a battery module after a fuse operation.

Referring to FIG. 10, in a case in which the battery device 100 includes first, second, and third battery cells 100-1, 100-2 and 100-3, before the fuses FU1, FU2, and FU3 operate, the respective cell cases CA1, CA2 and CA3 of the first, second and third battery cells 100-1, 100-2 and 100-3 are connected to the cell material portions CM1, CM2 and CM3 by connection portions CNT1, CNT2 and CNT3, respectively.

Referring to FIG. 11, in a case in which the battery device 100 includes first, second, and third battery cells 100-1, 100-2 and 100-3, after the fuse FU2 in the second battery cell 100-2 operates, the cell cases CA1, CA2 and CA3 of the second battery cell 100-2, as well as the first and third battery cells 100-1 and 100-3, are connected to the cell material portions CM1, CM2 and CM3 by the connection portions CNT1, CNT2 and CNT3, respectively.

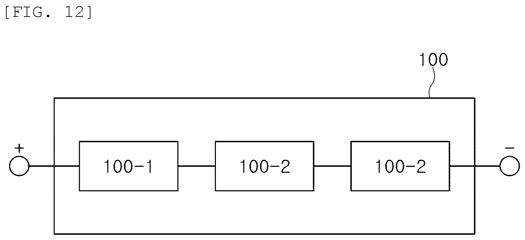

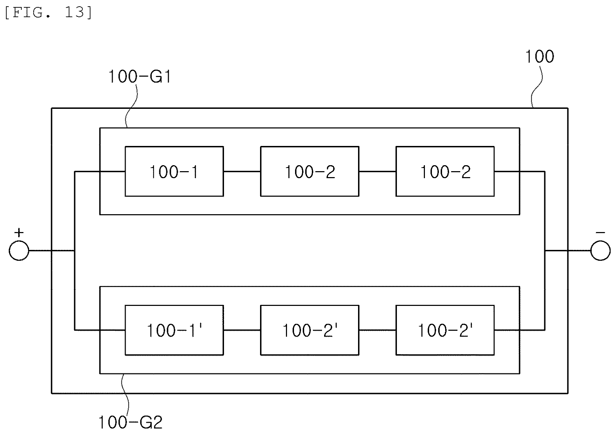

FIG. 12 illustrates a first connection structure between battery cells in a battery device and FIG. 13 illustrates a second connection structure between battery cells in a battery device.

Referring to FIG. 12, when the battery device 100 is a battery module, the battery module may include a plurality of battery cells 100-1, 100-2, and 100-3 connected in series.

Referring to FIG. 13, the battery module may include a structure in which a group of battery cells 100-G1 are connected in series and another group of battery cells 100-G2 are connected in parallel.

In addition, the plurality of battery cells 100-1, 100-2, and 100-3 of the group of battery cells 100-G1 and the plurality of battery cells 100-1', 100-2' and 100-3' of the other group of battery cells 100-G1 may be connected in series.

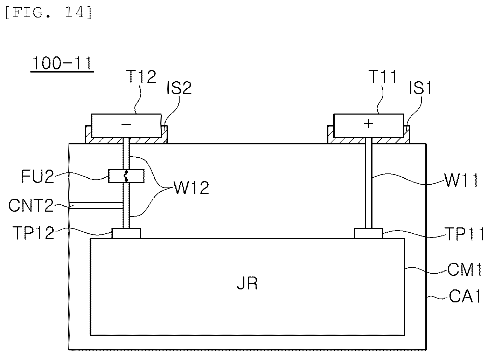

With reference to FIGS. 1 through 13, the technical feature of maintaining a positive (+) potential in the cell case by disposing a fuse between the cathode terminal and the cathode tab and electrically connecting the cathode tab and the cell case has been described. However, this is merely an example and is not necessarily limited thereto. For example, a technical feature of maintaining a negative (-) potential in the cell case by disposing a fuse between the anode terminal and the anode tab and electrically connecting the anode tab and the cell case may also be included within the scope and matters of the present disclosure. This will be described with reference to FIG. 14.

FIG. 14 is a diagram of a battery cell according to an embodiment of the present disclosure.

Referring to FIG. 14, a battery cell 100-11 according to an embodiment of the present disclosure may include a cell case CA1, a cathode terminal T11, an anode terminal T12, a cell material portion CM1, a fuse FU2 and a connection portion CNT2. The battery cell 100-11 illustrated in FIG. 14 differs from the battery cell 100-1 illustrated in FIG. 1 in the arrangement position of the fuse FU2 and the connection portion CNT2. Therefore, redundant descriptions will be omitted and only the differences will be described.

The fuse FU2 may electrically connect the anode terminal T12 to the anode tab TP12. Furthermore, the connection portion CNT2 may electrically connect the anode tab TP12 of the cell material portion CM1 to the cell case CA1 so that the cell case CA1 maintains a negative polarity. For example, the connection portion CNT2 may always electrically connect the anode terminal T12 and the cell case CA1, regardless of the operation of the fuse FU2. For example, the connection portion CNT2 may include a conductive material. For example, the connection portion CNT2 may include aluminum, but is not limited thereto.

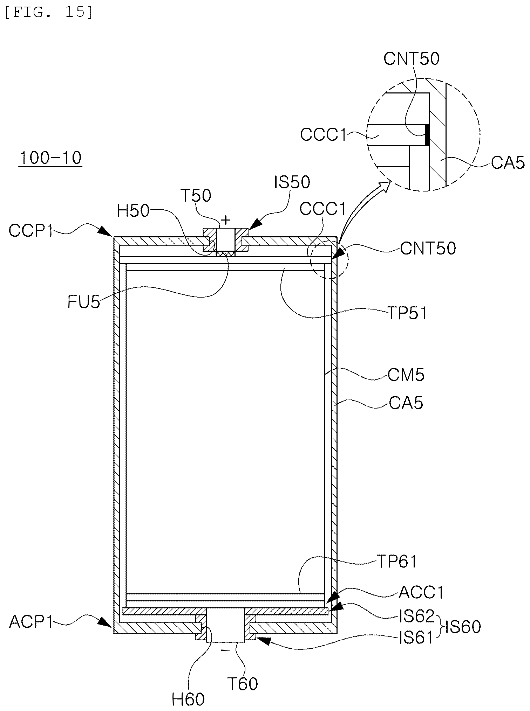

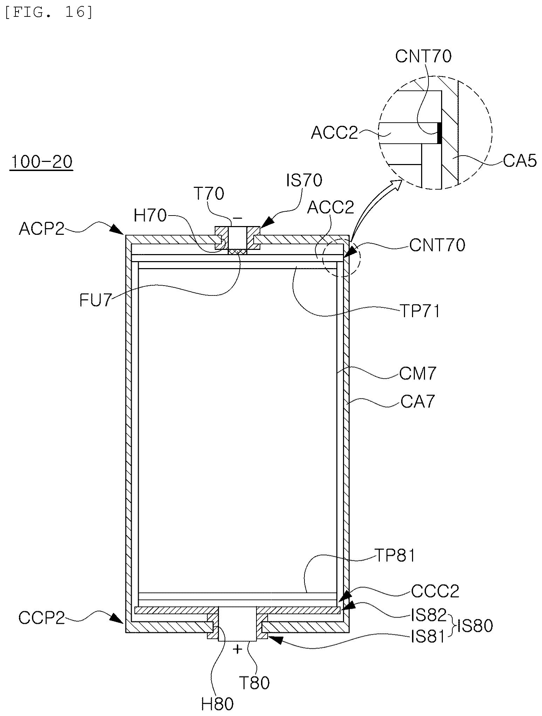

Furthermore, referring to FIGS. 1 to 14, the battery cell described above may be applied to a rectangular structure. This is for convenience of description and understanding, and the battery cell of the present disclosure is not limited to a rectangular structure and may have various structures. A cylindrical battery cell will be described below with reference to FIGS. 15 and 16.

Furthermore, any descriptions given above with reference to FIGS. 1 to 14 that correspond to the battery cell illustrated in FIGS. 15 and 16 may be applied to the description below.

FIG. 15 is a diagram illustrating an example of a cylindrical structure of a battery cell according to an embodiment of the present disclosure.

Referring to FIG. 15, a battery cell 100-10 according to an embodiment of the present disclosure may include a cell case CA5, a cell material portion CM5, a cathode current collector CCC1, an anode current collector ACC1, a cathode cap CCP1, a cathode terminal T50, a cathode tab TP51, an anode cap ACP1; an anode terminal T60, an anode tab TP61, a first cathode insulating portion IS50, a first anode insulating portion IS60, a fuse FU5 and a connection portion CNT50.

The cell case CA5 may have a cylindrical structure and may include the cell material portion CM5, the fuse FU5, and the connection portion CNT50 within the cell case. The cathode terminal T50 and the anode terminal T60 may be arranged on the outside of the cell case.

The cell material portion CM5 may be disposed within the cell case CA5, while insulated from the cell case CA5, and may include the cathode tab TP51 disposed on one side and the anode tab TP61 disposed on the other side, opposite to the one side.

The cathode current collector CCC1 may be disposed on the cathode tab TP51, while connected to the cell case CA5. The anode current collector ACC1 may be disposed on the anode tab TP61, while insulated from the cell case CA5.

The cathode cap CCP1 may be disposed on one side of the cell case CA5, while connected to the cell case CA5, and may cover the cathode current collector CCC1. The anode cap ACP1 may be disposed on the other side of the cell case CA5, while connected to the cell case CA5, and may cover the anode current collector ACC1.

The cathode terminal T50 may be inserted into a through-hole H50 formed in the cathode cap CCP1. The anode terminal T60 may be inserted into a through-hole H60 formed in the anode cap ACP1.

The first cathode insulating portion IS50 may be disposed between the cathode terminal T50 and the through-hole H50 of the cathode cap CCP1. The first anode insulating portion IS60 may be disposed between the anode terminal T60 and the through-hole H60 of the anode cap ACP1.

The fuse FU5 may be disposed between an inner surface of the cathode terminal T50 and the cathode current collector CCC1. The connection portion CNT50 may electrically connect the cathode current collector CCC1 and the cell case CA5. For example, the connection portion CNT50 may be a welded portion formed by welding, but is not limited thereto.

Also, referring to FIG. 15, the first anode insulating portion IS60 may include a first insulating portion IS61 and a second insulating portion IS62.

The first insulating portion IS61 may be disposed between the anode terminal T60 and an inner surface of the through-hole H60 of the anode cap ACP1, and the second insulating portion IS62 may be disposed on an inner peripheral portion of the anode terminal T60, while connected to the first insulating portion IS61.

In general, the cathode current collector CCC1 and the anode current collector ACC1 may each be formed of a material with low battery resistance, thereby acting as a current collector transmitting current between the corresponding tab and the corresponding terminal.

Referring to FIG. 15, the aforementioned connection portion CNT50 directly or indirectly electrically connects the cathode tab TP51 of the cell material portion CM1 and the cell case CA5 via the cathode current collector CCC1, thereby allowing the cell case CA5 to be connected to the cathode tab TP51 of the cell material portion CM5 via the connection portion CNT50, regardless of the operation of the fuse FU5, so that the cell case CA5 maintains a positive (+) potential.

FIG. 16 is diagram illustrating another example of a cylindrical structure of a battery cell according to an embodiment of the present disclosure.

Referring to FIG. 16, a battery cell 100-20 according to an embodiment of the present disclosure may include a cell case CA7, a cell material portion CM7, an anode current collector ACC2, a cathode current collector CCC2, an anode cap ACP2, an anode terminal T70, an anode tab TP71, a cathode cap CCP2, a cathode terminal T80, a cathode tab TP81, a second anode insulating portion IS50, a second cathode insulating portion IS80, a fuse FU7 and a connection portion CNT70.

The cell case CA7 may have a cylindrical structure and may include the cell material portion CM7, the fuse FU7, and the connection portion CNT70 on the inside, while the anode terminal T70 and the cathode terminal T80 may be arranged on the outside.

The cell material portion CM7 may be disposed within the cell case CA7, while insulated from the cell case CA7, and may include the anode tab TP71 disposed on one side thereof and the cathode tab TP81 disposed on the other side, opposite to the one side thereof.

The anode current collector ACC2 may be disposed on the anode tab TP71, while connected to the cell case CA7. The cathode current collector CCC2 may be disposed on the cathode tab TP81, while insulated from the cell case CA7.

The anode cap ACP2 may be disposed on one side of the cell case CA7, while connected to the cell case CA7, and may cover the anode current collector ACC2. The cathode cap CCP2 may be disposed on the other side of the cell case CA7, while connected to the cell case CA7, and may cover the cathode current collector CCC2.

The anode terminal T70 may be inserted into a through-hole H70 formed in the anode cap ACP2. The cathode terminal T80 may be inserted into a through-hole H80 formed in the cathode cap CCP2.

The second anode insulating portion IS50 may be disposed between the anode terminal T70 and the through-hole H70 of the anode cap ACP2. The second cathode insulating portion IS80 may be disposed between the cathode terminal T80 and the through-hole H80 of the cathode cap CCP2.

The fuse FU7 may be disposed between an inner surface of the anode terminal T70 and the anode current collector ACC2. The connection portion CNT70 may electrically connect the anode current collector ACC2 and the cell case CA7. For example, the connection portion CNT70 may be a welded portion formed by welding, but is not limited thereto.

In addition, referring to FIG. 16, the second cathode insulating portion IS80 may include a first insulating portion IS81 and a second insulating portion IS82.

The first insulating portion IS81 may be disposed between the cathode terminal T80 and an inner surface of the through-hole H80 of the cathode cap CCP2. The second insulating portion IS82 may be disposed on an inner outer periphery of the cathode terminal T80, while connected to the first insulating portion IS81.

Referring to FIG. 16, the aforementioned connection portion CNT70 directly or indirectly electrically connects the anode tab TP71 of the cell material portion CM7 and the cell case CA7 via the anode current collector ACC2, thereby connecting the cell case CA7 to the anode tab TP71 of the cell material portion CM7 through the connection portion CNT70, regardless of the operation of the fuse FU7, so that the cell case CA7 may maintain a negative (-) potential.

Although the present disclosure has been described above as an embodiment, the present disclosure is not limited to the above-described embodiment, and a person skilled in the art to which the invention pertains may make various modifications without departing from the gist of the present disclosure claimed in the claims.

## Claims

1. A battery cell comprising:
a cell case;
a cathode terminal disposed on one outer side of the cell case and insulated from the cell case;
an anode terminal disposed on the other outer side of the cell case and insulated from the cell case, the anode terminal being spaced apart from the cathode terminal;
a cell material portion disposed inside the cell case and having a cathode tab electrically connected to the cathode terminal and an anode tab electrically connected to the anode terminal;
a fuse electrically connected to the cathode terminal and the cathode tab, the fuse being opened during an operation to qlectrically disconnect the cathode terminal and the cathode tab; and
a connection portion electrically connecting the cathode tab of the cell material portion and the cell case.

2. The battery cell of claim 1, further comprising:
a first conducting wire electrically connecting the cathode terminal to the cathode tab through the fuse; and
a second conducting wire electrically connecting the anode terminal to the anode tab.

3. The battery cell of claim 2, further comprising:
a first insulating portion separating the cathode terminal and the first conducting wire from the cell case; and
a second insulating portion separating the anode terminal and the second conducting wire from the cell case.

4. The battery cell of claim 2, wherein the connection portion is electrically connected to the cathode tab of the cell material portion through the first conducting wire.

5. The battery cell of claim 1, wherein the connection portion is directly electrically connected to the cathode terminal of the cell material portion.

6. The battery cell of claim 3, wherein
the first insulating portion includes:
a first through-hole through which the first conducting wire passes to connect the cathode terminal and the cathode tab; and
a first extension extending from a position between the cell case and the cathode terminal to a space between the cell case and the first conducting wire.

7. The battery cell of claim 3, wherein
the second insulating portion includes:
a second through-hole through which the second conducting wire passes to connect the anode terminal and the anode tab; and
a second extension extending from a position between the cell case and the anode terminal to a space between the cell case and the second conducting wire.

8. A battery device comprising:
a housing; and
a plurality of battery cells arranged inside the housing and electrically connected to each other,
wherein at least one of the plurality of battery cells includes:
a cell case;
a cathode terminal disposed on one outer side of the cell case and insulated from the cell case;
an anode terminal disposed on the other outer side of the cell case and insulated from the cell case, the anode terminal being spaced apart from the cathode terminal;
a cell material portion disposed inside the cell case and having a cathode tab electrically connected to the cathode terminal and an anode tab electrically connected to the anode terminal;
a fuse electrically connected to the cathode terminal and the cathode tab, the fuse being opened during an operation to qlectrically disconnect the cathode terminal and the cathode tab; and
a connection portion electrically connecting the cathode tab of the cell material portion and the cell case.

9. The battery device of claim 8, further comprising:
a first conducting wire electrically connecting the cathode terminal to the cathode tab through the fuse; and
a second conducting wire electrically connecting the anode terminal to the anode tab.

10. The battery device of claim 9, further comprising:
a first insulating portion separating the cathode terminal and the first conducting wire from the cell case; and
a second insulating portion separating the anode terminal and the second conducting wire from the cell case.

11. The battery device of claim 8, wherein the connection portion is directly electrically connected to the cathode terminal of the cell material portion.

12. The battery device of claim 9, wherein the connection portion is electrically connected to the cathode tab of the cell material portion through the first conducting wire.

13. The battery device of claim 10, wherein
the first insulating portion includes:
a first through-hole through which the first conducting wire passes to connect the cathode terminal and the cathode tab; and
a first extension extending from a position between the cell case and the cathode terminal to a space between the cell case and the first conducting wire.

14. The battery device of claim 10, wherein
the second insulating portion includes:
a second through-hole through which the second conducting wire passes to connect the anode terminal and the anode tab; and
a second extension extending from a position between the cell case and the anode terminal to a space between the cell case and the second conducting wire.

15. A battery cell comprising:
a cell case;
a cell material portion, insulated from the cell case and disposed inside the cell case, having a cathode tab disposed on one side and an anode tab disposed on the other side, opposite to the one side;
a cathode current collector connected to the cell case and disposed on the cathode tab;
an anode current collector insulated from the cell case and disposed on the anode tab;
a cathode cap connected to the cell case, disposed on one side of the cell case, and covering the cathode current collector;
a cathode terminal inserted into a through-hole formed in the cathode cap;
a fuse disposed between an inner surface of the cathode terminal and the cathode current collector; and
a connection portion electrically connecting the cathode current collector and the cell case.

16. The battery cell of claim 15, further comprising:
an anode cap connected to the cell case, disposed on the other side of the cell case, and covering the anode current collector;
an anode terminal inserted into a through-hole formed in the anode cap;
a first cathode insulating portion disposed between the cathode terminal and the through-hole of the cathode cap; and
a first anode insulating portion disposed between the anode terminal and the through-hole of the anode cap.

17. The battery cell of claim 16, wherein
the first anode insulating portion includes:
a first insulating portion disposed between the anode terminal and an inner surface of the through-hole of the anode cap; and
a second insulating portion connected to the first insulating portion and disposed on an inner outer periphery of the anode terminal.

18. A battery cell comprising:
a cell case;
a cell material portion, insulated from the cell case and disposed inside the cell case, having an anode tab disposed on one side thereof and a cathode tab disposed on the other side thereof, opposite to the one side;
an anode current collector connected to the cell case and disposed on the anode tab;
a cathode current collector insulated from the cell case and disposed on the cathode tab;
an anode cap connected to the cell case, disposed on one side of the cell case, and covering the anode current collector;
an anode terminal inserted into a through-hole formed in the anode cap;
a fuse disposed between an inner surface of the anode terminal and the anode current collector; and
a connection portion electrically connecting the anode current collector and the cell case.

19. The battery cell of claim 18, further comprising:
a cathode cap connected to the cell case, disposed on the other side of the cell case, and covering the cathode current collector;
a cathode terminal inserted into a through-hole formed in the cathode cap;
a second anode insulating portion disposed between the anode terminal and the through-hole of the anode cap; and
a second cathode insulating portion disposed between the cathode terminal and the through-hole of the cathode cap.

20. The battery cell of claim 19, wherein
the second cathode insulating portion includes:
a first insulating portion disposed between the cathode terminal and an inner surface of the through-hole of the cathode cap; and
a second insulating portion connected to the first insulating portion and disposed on an inner outer periphery of the cathode terminal.
